# EUROPEAN PATENT APPLICATION

(11) **EP 4 826 619 A1**
(43) Date of publication of application: **21.10.2026**
(21) Application number: 26154443.1
(22) Date of filing: 27.01.2026
(51) Int. Cl.: G06Q 10/083, G08G 5/26, G08G 5/34, G08G 5/55

(54) **APPARATUSES, COMPUTER-IMPLEMENTED METHODS, AND COMPUTER PROGRAM PRODUCTS FOR MULTIPLE VEHICLE CONTROL**

(30) Priority: 16.04.2025 US 202519180397
(71) Applicant: Honeywell International s.r.o, 148 00 Chodov (CZ)
(72) Inventor: BOUDA, Tomas, Charlotte, 28202 (US); AVERKOVA, Dariia, Charlotte, 28202 (US); MONTOYA, Roberto Gudino, Charlotte, 28202 (US); SEKULOVA, Katerina, Charlotte, 28202 (US)
(74) Representative: Haseltine Lake Kempner LLP

(57) **Abstract**

Embodiments of the disclosure provide for simultaneous control of multiple vehicles. In the context of an apparatus, the apparatus includes a fleet map display configured to display one or more assigned vehicle flight plans. The apparatus additionally includes a mission strips interface configured to (i) receive confirmation from an operator to accept one or more assigned missions, and (ii) display one or more mission strips corresponding to the one or more assigned missions, the one or more mission strips configured to display a subset of a set of mission information. The apparatus additionally includes a selected mission interface configured to display one or more extended mission strips corresponding to one or more selected missions of the one or more assigned missions. The mission strips interface and the selected mission interface are configured to arrange information for display according to mission lifecycle, operator requested information, and pending tasks.

## Description

### GOVERNMENT LICENSE RIGHTS

The project leading to this application has received funding from the SESAR 3 under grant agreement No 101114733 under European Union's DARWIN research and innovation programme. The government has certain rights in the invention.

### TECHNOLOGICAL FIELD

Embodiments of the present disclosure are generally directed to systems and methods for simultaneous control of multiple vehicles by a single operator.

### BACKGROUND

With the development of autonomous vehicles that execute various missions, such as package delivery, power line inspections, cargo shipping, passenger transportation, and the like, there exists a growing need for enabling vehicle control beyond the visual line of sight (BVLOS). Ground control stations (GCSs) that are SATCOM- or LTE-based, for example, may be configured to provide such control. Complex vehicles transporting cargo and/or passengers may required higher assurance level systems, to comply with Safety and Human Factors standards, for example. Generally, many unmanned vehicle applications require control from a ground control station (or other control station), and staffing such stations depends on the capacity of each individual operator for controlling one or more vehicles.

Applicant has discovered various technical problems associated with controlling multiple vehicles and vehicle missions simultaneously. Through applied effort, ingenuity, and innovation, Applicant has solved many of these identified problems by developing the embodiments of the present disclosure, which are described in detail below.

### BRIEF SUMMARY

In accordance with a first aspect of the disclosure, a vehicle control system is provided. In some example embodiments, the vehicle control system includes a fleet map display configured to display one or more assigned vehicle flight plans. In some example embodiments, the vehicle control system includes a mission strips interface configured to receive confirmation from an operator to accept one or more assigned missions. The vehicle control system may additionally be configured to display one or more mission strips corresponding to the one or more assigned missions. The one or more mission strips may additionally be configured to display a subset of a set of mission information. In some example embodiments, the vehicle control system includes a selected mission interface configured to display one or more extended mission strips corresponding to one or more selected missions of the one or more assigned missions. In some example embodiments, the mission strips interface and the selected mission interface are configured to arrange information for display according to mission lifecycle, operator requested information, and pending tasks. In some example embodiments, the fleet map display, the mission strips interface, and the selected mission interface are configured to be displayed simultaneously.

In at least some embodiments, the vehicle control system is further configured to generate a mission checklist corresponding to a subject mission of the one or more assigned missions. The vehicle control system may further be configured to receive operator input corresponding to the generated mission checklist. The vehicle control system may further be configured to determine whether the subject mission has been accepted by the operator based at least in part on the operator input. The vehicle control system may further be configured to display an extended mission strip corresponding to the subject mission responsive to determining the subject mission has been accepted by the operator.

In at least some embodiments, the mission checklist corresponds to any of a flight plan change checklist, a pre-flight checklist, a post-flight checklist, a takeoff checklist, a landing checklist, and a landing checklist, and the mission checklist includes reviewing a flight plan, verifying energy conditions, checking a technical state of a vehicle, closing vehicle doors, and requesting mission approval.

In at least some embodiments, the mission strips interface enables a handover mechanism via which an operator can select a handover mission of the one or more assigned missions to be assigned to a different operator, wherein the handover mission is displayed in a handover window of the system until it is accepted by another operator.

In at least some embodiments, the mission strips interface and the selected mission interface are further configured to enable the operator to indicate a selected mission of the one or more assigned missions and generate a visual indication corresponding to the selected mission on the mission strips interface, the selected mission interface, and the fleet map display. The vehicle control system may further be configured to update the visual indication on the mission strips interface, the selected mission interface, and the fleet map display to indicate the second selected mission.

In at least some embodiments, the one or more mission strips are configured to display any of: current mission state, callsign, phase of flight, estimated time of arrival (ETA), remaining time to destination, speed, and vehicle altitude.

In at least some embodiments, the one or more extended mission strips are configured to display (i) a horizontal situation indicator (HIS) window, (ii) a quick action buttons window, (iii) a crew alerting system (CAS) window, (iv) a communication window, (v) a checklist window, and (vi) an overall mission process indicator as indicated by the set of mission information.

In accordance with another aspect of the present disclosure, a computer-implemented method for simultaneous vehicle control is provided. The computer-implemented method is executable utilizing any of a myriad of computing device(s) and/or combinations of hardware, software, firmware.

In at least some embodiments, the computer-implemented method includes displaying a fleet map comprising one or more assigned vehicle flight plans, receiving confirmation from an operator to accept one or more assigned missions, generating a display comprising one or more mission strips corresponding to the one or more assigned missions, the one or more mission strips configured to display a subset of a set of mission information, and generating a selected mission interface configured to display one or more extended mission strips corresponding to one or more selected missions of the one or more assigned missions, the one or more extended mission strips comprising. In at least some embodiments, the mission strips interface and the selected mission interface are configured to arrange information for display according to mission lifecycle, operator requested information, and pending tasks. In at least some embodiments, the fleet map display, the mission strips interface, and the selected mission interface are configured to be displayed simultaneously.

In accordance with another aspect of the present disclosure, a computer program product for providing simultaneous vehicle control is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a networked environment that may be specially configured within which embodiments of the present disclosure may operate.
FIG. 2 illustrates a block diagram of an example apparatus that may be specially configured in accordance with at least some example embodiments of the present disclosure.
FIG. 3A illustrates an example human machine interface in accordance with at least some example embodiments of the present disclosure.
FIG. 3B illustrates an example fleet map display in accordance with at least some example embodiments of the present disclosure.
FIG. 4 illustrates an example human machine interface in accordance with at least some example embodiments of the present disclosure.
FIG. 5 illustrates an example extended mission strip in accordance with at least some example embodiments of the present disclosure.
FIG. 6 illustrates an example minimalistic mission strip in accordance with at least some example embodiments of the present disclosure.
FIG. 7 illustrates a flowchart depicting operations of an example process for generating a vehicle control interface in accordance with at least some example embodiments of the present invention.
FIG. 8 illustrates a flowchart depicting operations of an example process for generating a vehicle control interface in accordance with at least some example embodiments of the present invention.
FIG. 9 illustrates a flowchart depicting operations of an example process for generating a vehicle control interface in accordance with at least some example embodiments of the present invention.
FIG. 10 illustrates a flowchart depicting operations of an example process for generating a vehicle control interface in accordance with at least some example embodiments of the present invention.
FIG. 11 depicts an example GCS HMI in accordance with at least some embodiments of the present disclosure.
FIG. 12 depicts an example GCS HMI segment in accordance with at least some embodiments of the present disclosure.
FIG. 13 depicts an example GCS HMI segment in accordance with at least some embodiments of the present disclosure.
FIG. 14 depicts an example GCS HMI segment in accordance with at least some embodiments of the present disclosure.
FIG. 15 depicts an example GCS HMI segment in accordance with at least some embodiments of the present disclosure.
FIG. 16A depicts a first half of a GCS HMI segment in accordance with at least some embodiments of the present disclosure.
FIG. 16B depicts a second half of the same GCS HMI segment, and includes a flight plan minimized to the right hand side to accommodate display of the other data.
FIG. 17 depicts a GCS HMI segment in accordance with at least some embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

For an operator at a ground control station to effectively control multiple vehicles and/or missions simultaneously, a non-standard feature with respect to current control implementations, a human-machine interface must be provided which effectively and efficiently supports an operator in having situational awareness of all the vehicles/missions, monitoring associated tasks, enabling timely actions, all while preventing errors.

Embodiments of the present disclosure provide a myriad of technical advantages in the technical field of vehicle control systems by enabling simultaneous control of multiple vehicles via a single operator of a ground control system unit. The methods, apparatuses, and computer program products display detailed information about selected missions in a usable and efficient way, minimizing clutter and potential for human errors, while still displaying high level information about all missions in a usable and effective manner. Further, embodiments of the present disclosure support overall operator's tasks flow when multiple missions are in progress. Embodiments of the present invention provide a usable, effective human-machine interface which ensures efficient operation of multiple vehicles with respect to human factors and usability. By enabling a single operator to control multiple vehicles simultaneously, embodiments of the present disclosure enable increased efficiency with respect to the resources required to manage a fleet of vehicles.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Minimalistic mission strips" refer to display elements configured to display important information corresponding to a vehicle mission in a compact, concise manner. "Extended mission strips" or "expanded mission strips" refer to display elements configured to display expanded or additional information corresponding to a same vehicle mission when selected.

### Example Systems and Apparatuses of the Disclosure

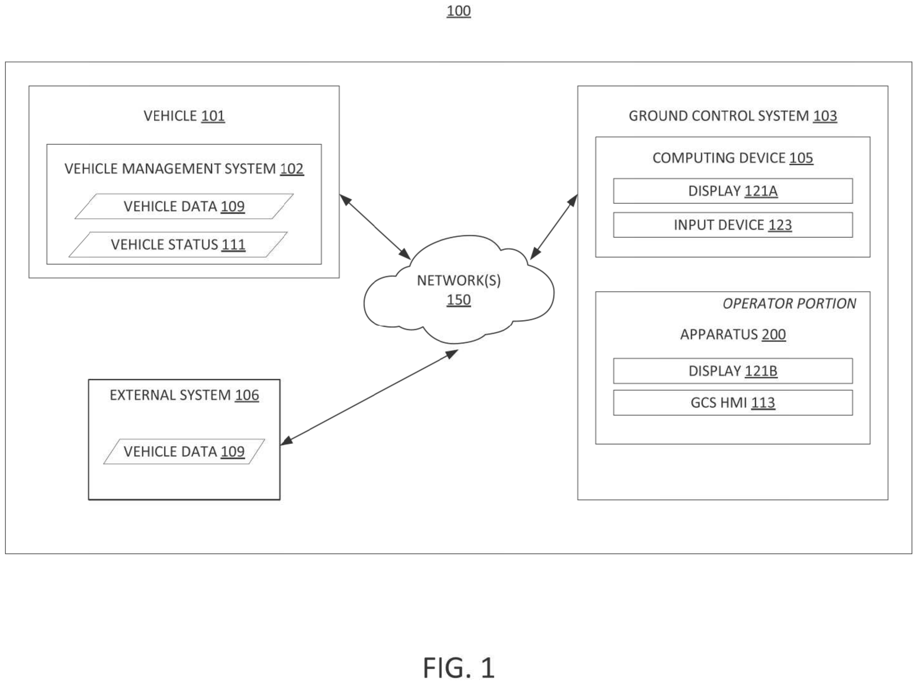

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, a ground control system 103, and, optionally, one or more external systems 106. In some embodiments, the ground control system 103 is external to the vehicle 101. For example, the ground control system 103 may include a remote computing environment in communication with the one or more vehicles 101. In some embodiments, the one or more vehicles 101 comprises all or a portion of the ground control system 103. In various embodiments the ground control system 103 is configured to enable operator control of the one or more vehicles 101. In doing so, the ground control system 103 may support single pilot operation (SPO) and simplified vehicle operation (SVO).

In various embodiments, the one or more vehicles 101 includes a passenger portion configured to accommodate one or more passengers. For example, the one or more vehicles 101 may include a seating area, cabin, deck, and/or the like that is allocated for holding passengers. In some embodiments, the passenger portion includes one or more computing devices configured to output media elements to one or more passengers. In some embodiments, the computing devices may be handheld devices, seat-mounted devices, wall-mounted devices, ceiling-mounted devices, window-mounted devices, passenger or operator wearable devices, and/or the like. In various embodiments, a computing device may include mobile devices, smartphones, tablets, phablets, kiosks, smart displays, speakers, Internet of Things (IoT) devices, smart appliances, and/or the like. The one or more vehicles 101 may include multiple different computing devices configured to provide various formats of media elements, such as audible media, visual media, tactile media, and/or the like.

In some embodiments, the one or more vehicles 101 include a vehicle management system 102 configured to generate or obtain vehicle data 109 that is indicative of operation of the one or more vehicles 101. The vehicle management system 102 may include any number of computing device(s) and/or other system(s) embodied in hardware, software, firmware, and/or the like. For example, the vehicle management system 102 may include one or more vehicle controls (e.g., rotor speed, rotor orientation, thrust, brakes, flaps, and/or the like). In some embodiments, the vehicle management system 102 includes an autopilot and/or the like that automatically controls the vehicle 101. The autopilot may be embodied in firmware, software, hardware, and/or the like such that the vehicle management system 102 may autonomously navigate the vehicle 101. Additionally, or alternatively, in some embodiments, the vehicle management system 102 is configured to execute control commands received from a remote computing environment, such as GCS 103.

In some embodiments, the vehicle management system 102 includes one or more vehicle recording systems configured to obtain and report one or more aspects of the vehicle or operation thereof. For example, the vehicle management system 102 may include a transponder, data uplink system, traffic collision avoidance system (TCAS), automatic dependent surveillance-broadcast (ADS-B), flight recorder, and/or the like. In some embodiments, the vehicle management system 102 is configured to receive vehicle data 109 from one or more external systems. In some embodiments, the vehicle management system 102 includes or is in communication with one or more sensors of the vehicle 101. For example, the vehicle management system 102 may include or communicate with image sensors, pressure sensors, temperature sensors, audio sensors, accelerometers, gyroscopes, magnetometers, inertial measurement units, and/or the like. In various embodiments, the vehicle management system 102 includes one or more sensors, systems, and/or the like configured to determine a physical position of the vehicle 101. For example, the vehicle management system 102 may include one or more satellite-based positioning systems configured to generate a geographic orientation of a vehicle, such as a GPS module.

In some embodiments, the vehicle management system 102 is configured to obtain images, videos, audio recordings, and/or the like of the passenger portion, the operator portion, and/or the like. In various embodiments, the vehicle management system 102 is configured to provision vehicle data 109 comprising images, videos, audio recordings, and/or the like to the GCS 103.

In various embodiments, the external system 106 includes any system that is external to the vehicle 101 and configured to generate vehicle data 109 indicative of operation of the vehicle 101. For example, the external system 106 may include radar systems, weather alert systems, vehicle traffic systems, ground stations, other vehicles 101, and/or the like, that are located outside of the vehicle 101. In some embodiments, the external system 106 is configured to provision vehicle data 109 to GCS 103, vehicle management system 102, computing device 105, and/or the like. For example, the external system 106 may provision weather reports, vehicle traffic reports, location-specific information, and/or the like to GCS 103.

In some embodiments, a vehicle status 111 includes a physical location of the vehicle 101, a proximity of the vehicle 101 to one or more physical locations (e.g., destinations, points of interest (POIs), and/or the like), a proximity of the vehicle 101 to other vehicles, and/or the like. In some embodiments, a vehicle status 111 includes a phase or progression of the vehicle 101 along a travel pathway. For example, the vehicle status 111 may include taxi, takeoff, ascent, cruising, pre-descent, descent, landing, arrival, and/or the like. In some embodiments, a vehicle status 111 includes presence of turbulence conditions or the forecasting of turbulent conditions (e.g., wind shear, mechanical turbulence, thermal turbulence, frontal turbulence, and/or the like). Additionally, or alternatively, a vehicle status 111 includes present or forecasted weather (e.g., winds, precipitation, temperature, fog, smog, dust), and/or the like. Vehicle status 111 may be used to inform, for example, a current mission status as described herein.

In some embodiments, ground control system 103 includes a computing device 105 and an apparatus 200. In some embodiments, the computing device 105 includes one or more displays 121A on which graphical user interfaces (GUIs), human-machine interfaces (HMIs), and other information related to vehicle operation, mission operation, and/or the like, may be rendered. In some embodiments, the display 121A includes a CRT (cathode ray tube), LCD (liquid crystal display) monitor, LED (light-emitting diode) monitor, and/or the like, for displaying information/data to an operator. In some embodiments, the computing device 105 includes one or more input devices 123 for receiving user inputs. The input device 123 may include any number of devices that enable human-machine interface (HMI) between an operator of the vehicle and the ground control system 103. In some embodiments, the input device 123 includes one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input device 123 includes one or more vehicle controls (e.g., joysticks, thumbsticks, yokes, steering wheels, accelerator control, thrust control, brake control, and/or the like) that enable an operator to control and issue instructions to the one or more vehicles 101.In at least some embodiments, computing device 105 may be referred to as a GCS backend component.

In some embodiments, apparatus 200 includes a display 121B and a ground control system human-machine interface (GCS HMI 113). Apparatus 200 may include one or more displays 121B on which graphical user interfaces (GUIs), human-machine interfaces (HMIs), and other information related to vehicle operation, mission operation, and/or the like, may be rendered. In some embodiments, the display 121B includes a CRT (cathode ray tube), LCD (liquid crystal display) monitor, LED (light-emitting diode) monitor, and/or the like, for displaying information/data to an operator. GCS HMI 113 may be a specialized interface configured to execute the operations as described herein.

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

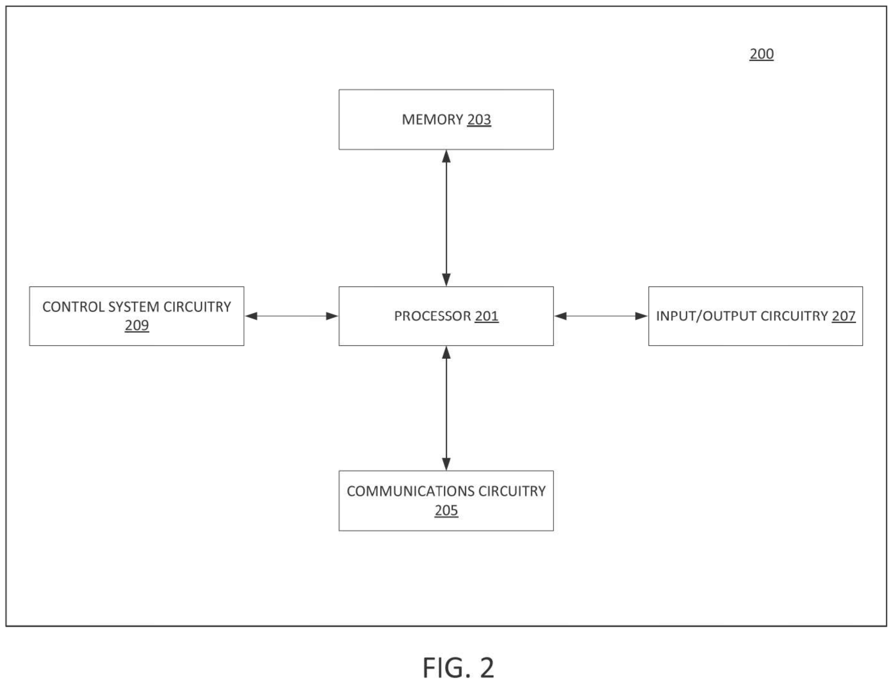

FIG. 2 illustrates a block diagram of an example apparatus 200 that may be specially configured in accordance with at least some example embodiments of the present disclosure. The apparatus 200 may carry out functionality and processes described herein to enable an operator to control multiple vehicles simultaneously. In some embodiments, the apparatus 200 includes a processor 201, memory 203, communications circuitry 205, input/output circuitry 207, and control circuitry 209. In some embodiments, the apparatus 200 is configured, using one or more of the processor 201, memory 203, communications circuitry 205, input/output circuitry 207, and/or control circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., generating display components, enabling user interactions, and/or the like). In some embodiments, the memory 203 is embodied as a data store 107 as shown in FIG. 1 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with providing an interface and conducting operations associated with controlling multiple vehicle missions simultaneously. In some embodiments, the processor 201 includes hardware, software, firmware, and/or the like, that obtain vehicle data from vehicle management systems 102, external systems 106, and/or the like. For example, the processor 201 may obtain vehicle statuses from one or more vehicle management systems 102 configured to generate or measure vehicle speed, location, acceleration, health, and/or the like. As another example, the processor 201 may obtain operator commands from a computing device 105 associated with an operator. As another example, the processor 201 may generate conditions based at least in part on data associated with operation of the vehicle 101, such as a travel pathway.

In some embodiments, the apparatus 200 includes input/output circuitry 207 that provides output to a user and, in some embodiments, receives an indication of a user input. In various embodiments, the user is an operator of a vehicle 101, where the operator may be aboard or remote from the vehicle 101. For example, in some contexts, the input/output circuitry 207 provides output to and receives input from one or more operator computing devices, ground station operators, and/or the like. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display of an operator computing device, passenger computing device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from vehicle management systems 102, computing devices 105, and external systems 106 in communication with the apparatus 200. For example, the communications circuitry 205 may enable receipt of operator commands from a computing device 105.

The control circuitry 209 includes hardware, software, firmware, and/or a combination thereof, that carry out processes for providing conditional guidance to passengers based at least in part on vehicle data. For example, in some contexts, the control circuitry 209 includes hardware, software, firmware, and/or the like, that process vehicle data 109 to determine corresponding mission data/mission information. In some embodiments, the control circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or control circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication circuitry 205, and/or control circuitry 209 is/are combined with the processor 201, such that the processor 201 performs one or more of the operations described above with respect to each of these sets of circuitry 203-209.

### Example Human Machine Interfaces (HMIs) of the Disclosure

Having described example systems and apparatuses in accordance with the disclosure, example human machine interfaces will now be discussed. It will be appreciated that each HMI depicts an example interface usable with respect to the apparatuses, systems, devices, and/or computer program products described herein, for example utilizing one or more of the specially configured components thereof.

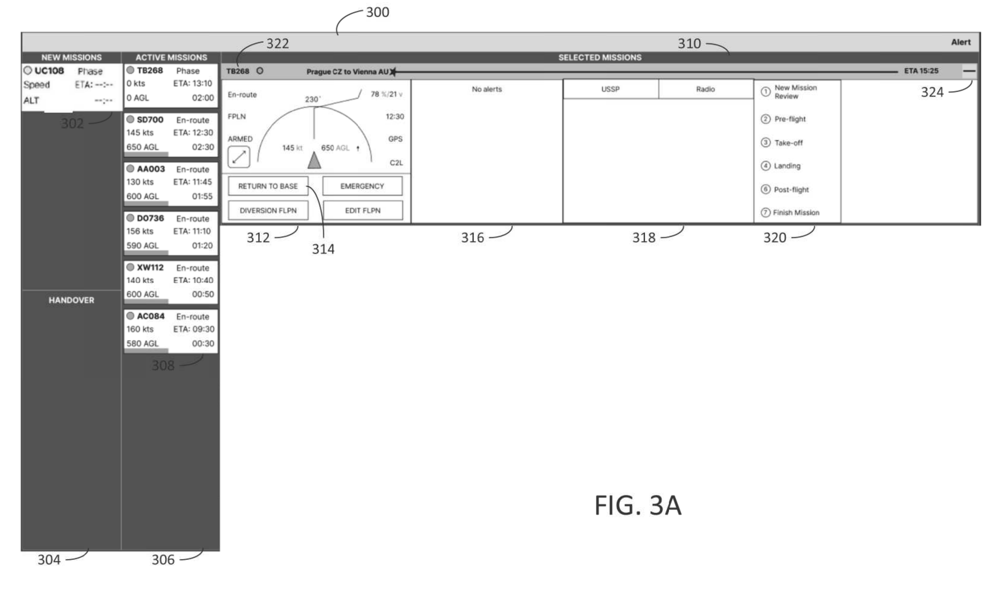

FIG. 3A illustrates an example human machine interface 300 in accordance with at least some example embodiments of the present disclosure. HMI 300 may correspond to a mission strips display. As depicted, HMI 300 includes new missions list 302, handover list 304, active mission list 306, minimalistic mission strip 308, and extended mission strip 310.

New missions list 302 may be an interface/display component configured to display one or more missions which have been assigned to an operator of HMI 300 but have not yet been approved. In some embodiments, new missions list 302 includes indicators corresponding to any missions which has been assigned to the operator of HMI 300 but which has not yet been acknowledged or accepted. In other embodiments, new missions list 302 includes indicators corresponding to any missions which have not yet been assigned to any operator, such that operators may view and select unassigned missions to control. In general, new missions list 302 is an interface element via which an operator can acknowledge, accept, or reject missions which are not yet a part of their active sessions. Mission strips within new missions list 302 may be configured to be sorted according to one or more temporal conditions, such as how soon a next task must be completed, time until mission start, and the like.

Handover list 304 may be an interface/display component configured to display one or more missions which were not accepted by the operator of HMI 300 but have not yet been assigned to another operator or another ground system. In at least some embodiments, handover list 304 is configured to be updated to include any new missions which the operator rejects immediately responsive to the operator indicating the rejection. In at least some embodiments, handover list 304 is configured to be updated to include any new missions which the operator has not accepted within a defined time interval. Such a defined time interval may correspond to an elapsed amount of time since the mission was added to the operator's new missions list 302, for example. Such a defined time interval may correspond to an amount of time prior to mission commencement (i.e., 1 hour before the mission begins, etc.). Mission strips within handover list 304 may be configured to be sorted according to one or more temporal conditions, such as how soon a next task must be completed, time until mission start, and the like. In at least some embodiments, handover list 304 is a component enabling an operator to move a mission from an active mission list to another operator outside of their GCS.

Active mission list 306 may be an interface/display component configured to display one or more missions which have been assigned to the operator of HMI 300 and which have been approved/accepted. In at least some embodiments, active mission list 306 includes all current and future missions which are currently assigned to the operator of HMI 300. In other embodiments, active mission list 306 includes only missions assigned to the operator of HMI 300 which have an actionable task/item within a defined time interval. For example, a mission which has been accepted but does not have any actionable tasks in the near term may not be displayed until a task deadline falls within a defined window, thereby reducing the number of active mission strips an operator must manage at any time. Mission strips within active mission list 306 may be configured to be sorted according to one or more temporal conditions, such as how soon a next task must be completed, time until mission start, and the like.

Minimalistic mission strip 308 may be an interface/display component configured to display a subset of mission information regarding a corresponding mission. In at least some embodiments, minimalistic mission strip 308 is configured to display a defined subset of mission information deemed most important to an operator, thereby enabling the operator to monitor important information via the minimalistic mission strip 308 without viewing the entire corresponding extended mission strip.

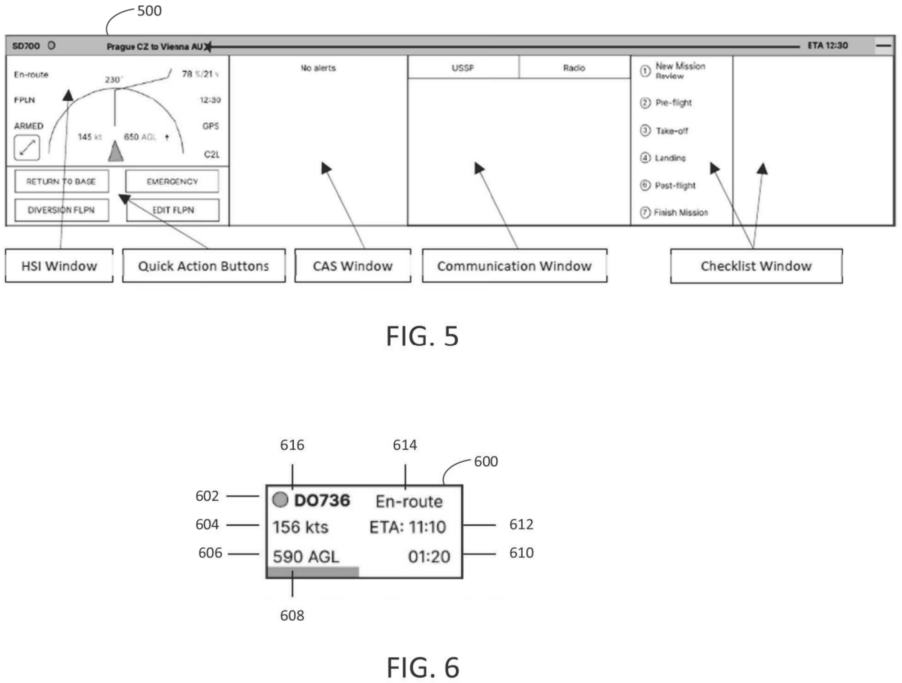

Extended mission strip 310 may be an interface/display component configured to display a set of mission information regarding a corresponding mission. Extended mission strip 310 is configured to display expanded mission information with respect to corresponding minimalistic mission strip 308. As depicted, extended mission strip 310 includes HSI window 312, quick action button(s) 314, CAS window 316, communication window 318, checklist window 320, overall mission status indicator 322, and exit button 324. FIG. 5 depicts a standalone extended mission strip 500 for the sake of clarity; the components of the extended mission strips described below with respect to FIG. 3A are additionally pertinent to the depicted corresponding components of FIG. 5.

HSI window 312 may be an interface/display component configured to display a horizontal situation indicator associated with a corresponding mission. HIS window 312 may be configured to display a vehicle's position and orientation relative to its defined course. As depicted, HIS window 312 may include an element indicating whether the vehicle is currently on course, as well as any number of additional metrics/data items indicating current vehicle travel status. In at least some embodiments, an attitude indicator may be displayed in the same location as the HSI window 312. In some embodiments, an attitude indicator may be displayed instead of the HSI window 312. In some embodiments, the attitude indicator and the HSI window 312 are configured to be displayed concurrently. In yet additional embodiments, the HIS window 312 and the attitude indicator are switchable components, such that one or the other is displayed at a given time, and a switch from displaying the HSI window 312 to the attitude indicator, or vice versa, can be triggered at any time.

Quick action button(s) 314 may include one or more interface components configured to enable an operator to quickly trigger one or more corresponding actions. In at least some embodiments, quick action button(s) 314 include a "return to base" button configured to trigger an immediate diversion to a route returning the vehicle to its base location. Interacting with the "return to base" button may override any outstanding missions/mission objectives and plot a fastest course back to the vehicle's base, which the vehicle will then follow responsive to the triggering of said button. In at least some embodiments, quick action button(s) 314 include a "diversion flight plan" button configured to trigger an immediate diversion to a predetermined or predefined diversion route. Such a predefined diversion route may be situationally defined by an operator or by the creator of the corresponding mission. For example, a mission may require a diversion route to avoid potentially forecasted weather (such as rain), and an operator may be able to trigger a diversion to a secondary route responsive to detection of rain with respect to the primary route.

In at least some embodiments, quick action button(s) 314 include an emergency button, which an operator may utilize to trigger one or more emergency functions with respect to the controlled vehicle, the vehicle control system, or a combination of the two. For example, the emergency button may be configured to trigger an emergency function of the vehicle, which may engage any number of emergency functions such as disabling the vehicle, initiating an emergency shutdown of the vehicle, commencing an alarm sequence with respect to the vehicle, triggering transmission of an emergency/SOS message from/corresponding to the vehicle, and the like. In at least some embodiments, quick action button(s) 314 include an edit flight plan button, which enables an operator to issue one or more commands altering the current flight plan.

Crew alerting system (CAS) window 316 may be a window configured to provide an operator with alerts/notifications corresponding to abnormal vehicle conditions, emergencies related to the vehicle's operational capabilities, and mission issues. In at least some embodiments, CAS window 316 provides visual and aural indications on warning, caution, and advisory alerts.

Communication window 318 may be configured to display communications corresponding to the subject vehicle operation and the selected mission. In at least some embodiments, communication window 318 includes a radio tab enabling the operator to tune various frequencies into the radio(s) and set preferences for communicating via the various channels. In at least some embodiments, communication window 318 includes a U-space service provider (USSP) tab enabling an operator to establish preferences for digital communications with USSP.

Checklist window 320 may be configured to provide one or more checklists corresponding to the selected mission. In at least some embodiments, checklist window 320 is configured to display checklists corresponding to different mission conditions; for example, checklist window 320 may be configured with a first checklist corresponding to normal mission operations, a second checklist corresponding to abnormal mission operations, and a third checklist corresponding to emergency mission operations. Depending on a detected/determined mission state, checklist window 320 may be configured to display the checklist most appropriate for current mission circumstances (in other words, the normal checklist is displayed during normal mission circumstances, the emergency checklist is displayed during emergency mission circumstances, etc.).

Overall mission status indicator 322 may be configured to display a color or pattern associated with a current state and/or alert concerning the selected mission. In at least some embodiments, overall mission status indicator 322 is configured to display one of three colors: green, amber, or red. A green indicator indicates normal operation, and is displayed in circumstances where there are no technical or mission related issues. An amber indicator indicates abnormal operation and a caution level of alert, and is displayed when a technical or mission issue requires operator attention and subsequent action. A red indicator indicates abnormal operation and the warning level of alert, and is displayed when a technical or mission issue requires immediate operator attention and action.

Exit button 324 may be configured to minimize the extended mission strip, or otherwise remove it from prominent display. In at least some embodiments, exit button 324 is configured for selection via a cursor and/or a touch screen, for example. In general, exit button 324 provides a mechanism by which the operator may minimize display of the extended mission strip.

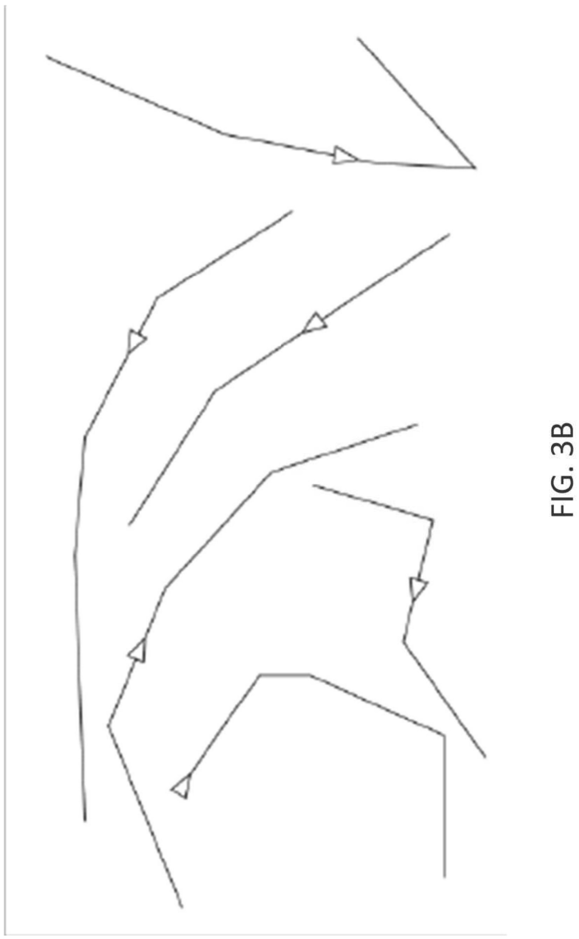

FIG. 3B illustrates an example fleet map display in accordance with at least some example embodiments of the present disclosure. As depicted, the fleet map display includes a plurality of vehicles (depicted as triangles) along the corresponding lines which indicate their travel paths. The fleet map display may be displayed concurrently with the corresponding mission strips display.

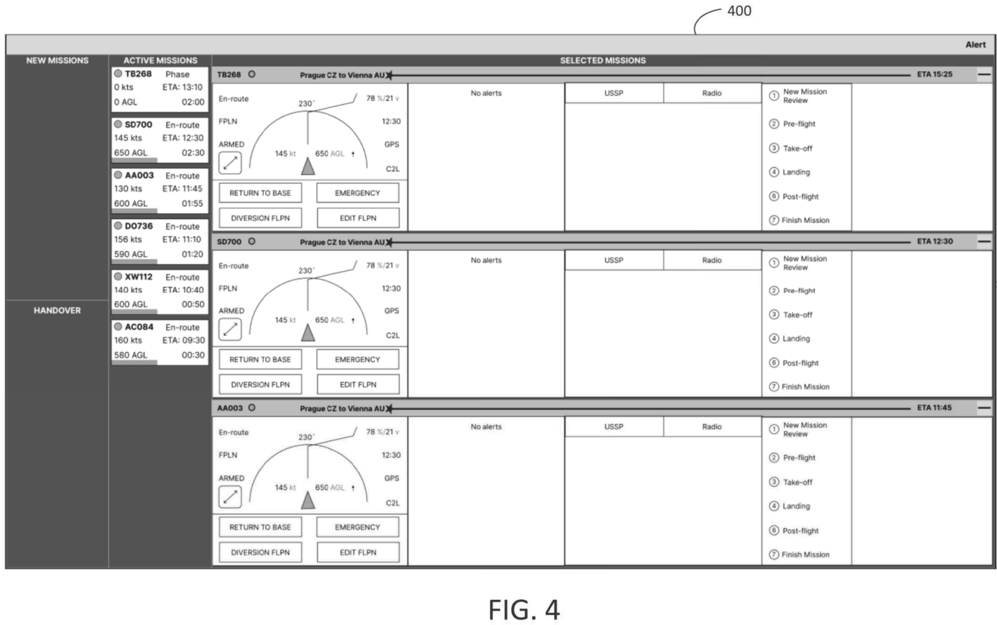

FIG. 4 illustrates an example human machine interface 400 in accordance with at least some example embodiments of the present disclosure. As depicted, HMI 400 is configured similarly to HMI 300, but displays extended mission strips 402 corresponding to three selected missions simultaneously. In the embodiments depicted with respect to HMI 300 and HMI 400, the available space for displaying extended mission strips is segmented into thirds, such that three extended mission strips may be displayed simultaneously. In the depicted embodiments, when a single extended mission strip is displayed, the single extended mission strip is not stretched/expanded to fill the available space; in other embodiments, an extended mission strip may be expanded to fill the available space such that the mission details are displayed in a larger text, for example. A limit may be placed on the number of selected missions which may be displayed at once, thereby ensuring that the space does not become overloaded such that the mission information for each mission is not displayable. In the case where an operator selects an additional mission for display when the mission limit has already been reached, an alert may be generated informing the operator of the limit, and/or the newly selected mission strip may replace an oldest/inactive selected mission strip (when available).

FIG. 6 illustrates an example minimalistic mission strip 600 in accordance with at least some example embodiments of the present disclosure. As depicted, minimalistic mission strip 600 includes indicators corresponding to a mission state 602, a speed 604, an altitude 606, a mission progress 608, a remaining time to destination 610, an estimated time of arrival 612, a phase of mission 614, and a callsign 616. Minimalistic mission strip 600 provides important mission information in a compact visual.

Mission state indicator 602 may be configured to display a color or pattern associated with a current state and/or alert concerning the selected mission. In at least some embodiments, mission state indicator 602 is configured to display one of three colors: green, amber, or red. A green indicator indicates normal operation, and is displayed in circumstances where there are no technical or mission related issues. An amber indicator indicates abnormal operation and a caution level of alert, and is displayed when a technical or mission issue requires operator attention and subsequent action. A red indicator indicates abnormal operation and the warning level of alert, and is displayed when a technical or mission issue requires immediate operator attention and action.

Speed indicator 604 may be configured to display a current travel speed of the subject vehicle. In at least some embodiments, the current speed of the vehicle is received via one or more onboard monitors configured to determine/measure the vehicle's current speed. Altitude indicator 606 may be configured to display a current altitude corresponding to the subject vehicle. In at least some embodiments, the current altitude of the vehicle is received via one or more onboard monitors configured to determine the vehicle's current altitude.

Mission progress indicator 608 may be configured to display a visual indication of the overall mission progress. In at least some embodiments, mission progress indicator 608 considers a mission's progress beginning with mission allocation (review and acceptance of the mission by the operator), and ends with mission de-allocation (return of the vehicle to a pool of available vehicles, for example). In other embodiments, mission progress indicator 608 considers only travel duration, from departure to arrival. In at least some embodiments, in addition to a progress bar as depicted, mission progress indicator 608 may include a text/numerical caption depicting/describing current mission progress.

Remaining time to destination indicator 610 may be configured to determine a remaining mission duration. In at least some embodiments, remaining time to destination indicator 610 is configured to determine the remaining time based on pre-loaded mission details, such as estimated duration. In at least some embodiments, remaining time to destination indicator 610 is configured to determine the remaining time based on a determination of the vehicle's distance to its destination (based on GPS data, for example) and a determination of the vehicle's operating speed. Estimated time of arrival 612 may be determined according to the same set of factors, or may be determined based on the remaining time to destination indicator 610 and a current time.

Mission phase indicator 614 may be configured to indicate an actual phase of the vehicle's mission. Mission phases may include, but are not limited to, pre-flight, taxi, take off, in-flight, landing, post-flight, and the like. Callsign 616 may be configured to present a unique identifier of the operated vehicle.

### Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Similarly, it should be appreciated that one or more of the operations of each flowchart may be combinable, replaceable, and/or otherwise altered as described herein.

With respect to each process described below, the ground control system human machine interface (GCS HMI) may be configured to allow an operator to configure the HMI display layout in a way that enables increased awareness to assigned missions and corresponding tasks by providing a clear visual display of a mission's lifecycle, automating opening/closing mission detailed information according to the current needs of the operator, and enabling mission tasks to be performed while keep visual and information clutter at a minimum and enabling display of information regarding additional assigned missions. Notably, the minimalistic mission strips as defined above provide high-level information corresponding to each assigned mission, while the extended mission strips provide detailed-level information. The extended mission strips may additionally be configured to display tasks to be completed, and a checklist window to be displayed.

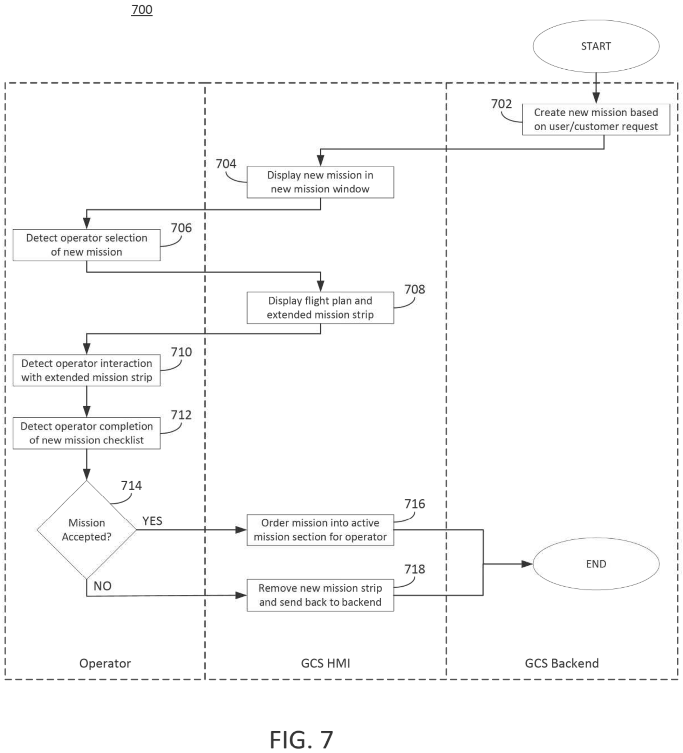

FIG. 7 illustrates a flowchart depicting operations of an example process for generating a vehicle control interface in accordance with at least some example embodiments of the present invention. As depicted, process 700 includes creating (702) a new mission based on a user request, displaying (704) the new mission in a new mission window, detecting (706) operator selection of the new mission, generating (708) display of a flight plan and an extended mission strip, detecting (710) operator interaction with the extended mission strip, detecting (712) operator completion of a new mission checklist, determining (714) whether the mission has been accepted, ordering (716) the mission into an active mission section for the operator, and removing (718) the new mission strip from the operator's interface. As depicted, various steps of process 700 are executed by a GCS backend component, a GCS HMI component, and a GCS operator. It should be appreciated that the steps depicted in the operator column may be steps detected by the GCS HMI responsive to a user interaction, for example. Process 700 may enable simultaneous mission control by a single operator. Process 700 may include steps required to assign a new mission to an operator.

At step 702, GCS backend component creates a new mission based on a user request. Creating (702) a new mission based on a user request may include receiving a user initiated request comprising mission information corresponding to a new mission to be assigned. In at least some embodiments, such mission information may include a subject vehicle or vehicle type, a destination, a departure location, timing information, mission type, mission restrictions, privacy requirements, and the like. In at least some embodiments, such as those where mission information is created and stored in a data store or database, for example, creating (702) a new mission based on a user request may include receiving a mission identification corresponding to a desired mission and extracting mission information corresponding to the desired mission from such a data store. Generally, creating (702) a new mission based on a user request includes identifying mission information corresponding to a subject new mission for display to a user.

At step 704, GCS HMI displays the new mission in a new mission window. Displaying (704) the new mission in a new mission window may include generating a minimalistic mission strip corresponding to the new mission for display via the GCS HMI to an operator. In at least some embodiments, the minimalistic mission strip is configured to display important information regarding the mission to an operator in a compact element. In at least some embodiments, displaying (704) the new mission in a new mission window includes displaying prioritized mission information via a defined minimalistic mission strip format. In at least some embodiments, the GCS HMI component is configured to provide an interface via which the operator may interact with displayed mission strips (via a cursor or a touch screen, for example). In at least some embodiments, the minimalistic mission strip is configured to include any of a mission's callsign, a current state of the mission, a current speed of a vehicle assigned to the mission, a current altitude of the vehicle assigned to the mission, a general mission progress indicator or status, a mission time remaining indicator, an estimated time of arrival/completion corresponding to the mission, and a mission phase/state indicator. In embodiments wherein the new mission has not yet begun, certain mission information may not be pertinent or available, and as such, mission data such as speed or altitude may be blank or null in the minimalistic mission strip. In at least some embodiments, if the mission is not underway and therefore such mission information is unavailable, the minimalistic mission strip may be displayed with only the available information. In such embodiments, the data may be displayed more prominently/in a larger font, filling the available space.

At step 706, GCS HMI is configured to detect operator selection of the new mission. Detecting (706) operator selection of the new mission may include detecting an operator interaction with the minimalistic mission strip corresponding to the new mission. In at least some embodiments, detecting (706) operator selection of the new mission includes detecting a user interaction with a touch screen/manipulation of a cursor, and determining whether the interaction corresponds to a location at which the minimalistic mission strip corresponding to the new mission is displayed.

At step 708, GCS HMI is configured to generate display of a travel plan and an extended mission strip. Generating (708) display of a travel plan and an extended mission strip may include generating a mission strip component in a selected missions window displaying extended mission information corresponding to the new mission. In at least some embodiments, the extended mission strip is an interface component configured to display mission information beyond what is displayed by the corresponding minimalistic mission strip. In at least some embodiments, the extended mission strip includes a horizontal situation indicator, a mission checklist window, a communication window, a crew alert system window, and one or more quick access buttons. Each section of the extended mission strip may be updated according to current mission/vehicle information received from one or more systems configured to track vehicle/mission progress/state. An example extended mission strip is described in detail with respect to FIG. 3A and FIG.5; in general, the extended mission strip is an interface component comprising mission information and operator interactable buttons/selections beyond what is displayed with respect to the corresponding minimalistic mission strip. The generated travel plan may be a map displaying a planned/projected path of a mission vehicle. In at least some embodiments, such as those wherein the new mission is active, the generated travel plan may be updated to reflect a real time location of the mission vehicle based at least in part on vehicle location data.

At step 710, GCS HMI is configured to detect an operator interaction with the extended mission strip. Detecting (710) operator interaction with the extended mission strip may detecting an operator interaction with the extended mission strip corresponding to the new mission. In at least some embodiments, detecting (710) operator interaction with the extended mission strip includes detecting a user interaction with a touch screen/manipulation of a cursor, and determining whether the interaction corresponds to a location at which the extended mission strip corresponding to the new mission is displayed.

At step 712, GCS HMI is configured to detect operator completion of a new mission checklist. Detecting (712) operator completion of a new mission checklist may include detecting a user's interaction with a checklist window of the extended mission strip. In at least some embodiments, the new mission checklist may include one or more nominal tasks required for an operator to accept the mission. The new mission checklist may include, for example, planning or confirming a travel path, selecting a vehicle or reviewing a proposed vehicle selection, and asking for any necessary clearances for completing the mission. In at least some embodiments, detecting (712) operator completion of a new mission checklist includes determining whether the checklist has been completed responsive to a user interaction with (or a user's decision to exit/minimize) the checklist.

At step 714, GCS HMI is configured to determine whether the mission has been accepted by the operator. Determining (714) whether the mission has been accepted may include generating a prompt via which the operator can accept or decline the mission. In some embodiments, determining (714) whether the mission has been accepted includes determining whether the operator has moved the minimalistic mission strip corresponding to the mission from the new mission window to their assigned missions window. In at least some embodiments, such as those where the mission checklist includes an "assigned operator" section, determining (714) whether the mission has been accepted includes determining whether the operator has indicated their own name in the "assigned operator" section. If GCS HMI determines that the mission has been accepted (714, yes branch), the method continues by ordering the mission into an active mission window for the operator. If GCS HMI determines that the mission has not been accepted (714, no branch), the method continues by removing the new mission strip from the operator's interface and sending a notification to the GCS backend.

At step 716, GCS HMI is configured to order the mission into an active mission section for the operator. Ordering (716) the mission into an active mission section for the operator may include moving the minimalistic mission strip for the mission into an active missions window of the operator's interface. In at least some embodiments, such as those where the user accepts a mission by manually moving the minimalistic mission strip into their active missions window, for example, ordering (716) the mission into an active mission section includes placing the minimalistic mission strip into an appropriately ordered position based on one or more mission details (such as a next required task or mission start time, for example).

At step 716, GCS HMI is configured to remove the new mission from the operator's interface. Removing (718) the new mission strip from the operator's interface may include removing any minimalistic mission strip and any extended mission strip corresponding to the new mission from the operator's interface. Removing (718) the new mission from the operator's interface may additionally include returning a notification to the GCS backend component. GCS backend component may be configured to send the new mission to another operator responsive to the notification.

Minimalistic mission strips within a same window may be sorted according to a set of pre-defined rules. An example set of rules for ordering minimalistic mission strips is described below, though it should be appreciated that prioritization with respect to the ordering may be updated by an operator according to preference. Missions may initially be sorted from top to bottom such that the newest accepted mission is listed on top of the list and the oldest accepted mission is listed on the bottom of the list, and so on. In the presence of alerts with respect to the subject missions, the mission window may be ordered according to alert criticality, and within a same level of alert criticality, a time of the alert trigger. For example, a mission with a warning alert may be moved to the top of the window. In the presence of expected operator tasks, a mission which requires completion of a required task soonest (i.e., at a time nearest to the current time) may be ordered to the top of the mission window.

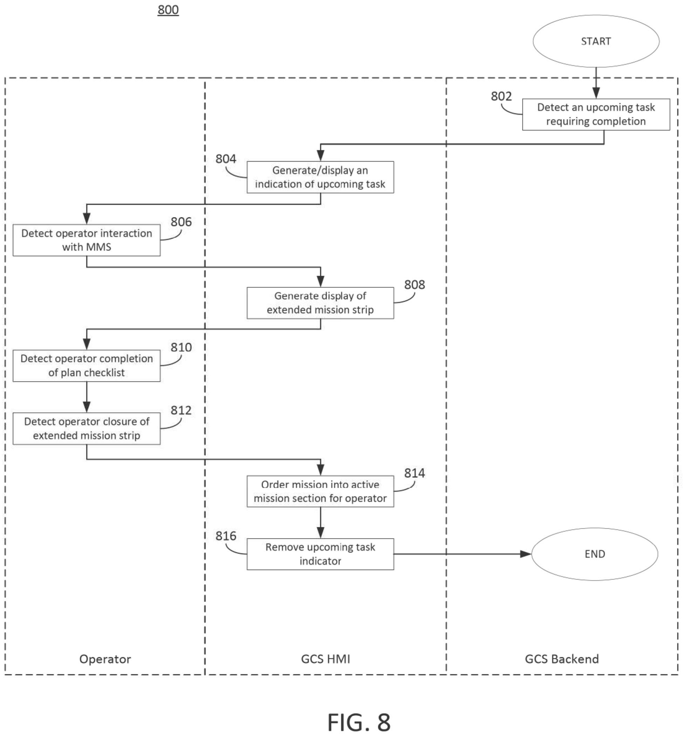

FIG. 8 illustrates a flowchart depicting operations of an example process for generating a vehicle control interface in accordance with at least some example embodiments of the present invention. As depicted, the process 800 includes detecting (802) an upcoming task requiring completion, generating (804) an indication of an upcoming task, detecting (806) an operator interaction with the minimalistic mission strip, generating (808) display of an extended mission strip, detecting (810) operator completion of a mission checklist, detecting (812) operator closure of the extended mission strip, ordering (814) the mission into an active mission section, and removing (816) the indication of the upcoming task. As depicted, various steps of process 800 are executed by a GCS backend component, a GCS HMI component, and a GCS operator. It should be appreciated that the steps depicted in the operator column may be steps detected by the GCS HMI responsive to a user interaction, for example. Process 800 may enable simultaneous mission control by a single operator. In at least some embodiments, process 800 depicts an example process for propagating an upcoming nominal task.

At step 802, GCS backend component is configured to detect an upcoming task requiring completion. Detecting (802) an upcoming task requiring completion may include analyzing one or more tasks corresponding to one or more active missions for an operator and determining whether any require completion. In at least some embodiments, tasks are defined with a deadline for completion; in such embodiments, detecting (802) an upcoming task requiring completion includes identifying a task with a deadline within a predefined period of time (1 minute, 5 minutes, etc.). Detecting (802) an upcoming task requiring completion may include identifying a most urgent task based on the defined deadlines, for example, and selecting said task as the subject task for completion.

At step 804, GCS HMI is configured to generate an indication of the upcoming task. Generating (804) an indication of the upcoming task may include generating an interface component identifying the subject task. In at least some embodiments, generating (804) an indication of the upcoming task includes, for the minimalistic mission strip of the mission to which the task corresponds, generating an icon for display within/with respect to the minimalistic mission strip. For example, generating (804) an indication of the upcoming task includes generating an indicator such as an exclamation point or other icon indicating a task requiring attention, or may display the corresponding minimalistic mission strip in a defined color to indicate an upcoming task deadline.

At step 806, GCS HMI is configured to detect an operator interaction with the minimalistic mission strip corresponding to the upcoming task. Detecting (806) an operator interaction with the minimalistic mission strip may include detecting a user interaction with a touch screen/manipulation of a cursor, and determining whether the interaction corresponds to a location at which the minimalistic mission strip corresponding to the upcoming task is displayed.

At step 808, GCS HMI is configured to generate display of an extended mission strip. Generating (808) display of an extended mission strip may include generating a mission strip component in a selected missions window displaying extended mission information corresponding to the subject mission. In at least some embodiments, the extended mission strip is an interface component configured to display mission information beyond what is displayed by the corresponding minimalistic mission strip. In at least some embodiments, the extended mission strip includes a horizontal situation indicator, a mission checklist window, a communication window, a crew alert system window, and one or more quick access buttons. Each section of the extended mission strip may be updated according to current mission/vehicle information received from one or more systems configured to track vehicle/mission progress/state. An example extended mission strip is described in detail with respect to FIG. 3A and FIG.5; in general, the extended mission strip is an interface component comprising mission information and operator interactable buttons/selections beyond what is displayed with respect to the corresponding minimalistic mission strip.

In at least some embodiments, opening/displaying an extended mission strip is governed by a set of defined rules. With respect to an operator's drag and drop interaction, in which the operator drags the minimalistic mission strip to a specific free slot inside the selected mission window, the extended mission is opened at the specific slot selected by the operator. If all slots are occupied, the extended mission strip is opened at the specific slot selected by the operator, and the previous extended mission strip is closed to make space for the manually selected strip. With respect to an operator's click/selection interaction, in which the operator simply selects an option to open the extended mission strip without indicating a specific destination, the extended mission strip will be opened at a first empty slot from the top (or the bottom, if an operator has updated a preference to indicate as much). If all slots are occupied, the extended mission takes the place of a first occupied slot from the top wherein the occupying mission does not have an alert (or has a lower priority alert than the other missions occupying the window).

At step 810, GSC HMI is configured to detect operator completion of a mission checklist. Detecting (810) operator completion of a mission checklist may include detecting an operator's interaction with a checklist window of the extended mission strip. In at least some embodiments, the mission checklist may include one or more nominal tasks required for an operator to complete the upcoming task. The mission checklist may include, for example, planning or confirming a travel path, selecting a vehicle or reviewing a proposed vehicle selection, and asking for any necessary clearances for completing the mission. In at least some embodiments, detecting (810) operator completion of a mission checklist includes determining whether the checklist has been completed responsive to an operator interaction with (or an operator's decision to exit/minimize) the checklist. In at least some embodiments, detecting (810) operator completion of a mission checklists additionally includes confirming completion of the subject upcoming task.

At step 812, GCS HMI is configured to detect operator closure of the extended mission strip. Detecting (812) operator closure of the extended mission strip may include detecting an operator's interaction, via a touch screen or a cursor for example, with a button configured to exit or minimize the subject extended mission strip. In at least some embodiments, detecting (812) operator closure of the extended mission strip additionally includes confirming completion of the subject upcoming task.

At step 814, GCS HMI is configured to order the mission into an active mission section. Ordering (814) the mission into an active mission section may include moving the minimalistic mission strip for the mission from a first position in an active missions window of the operator's interface to a second position in the active missions window based at least in part on a deadline for a next upcoming task.. In at least some embodiments, ordering (814) the mission in an active mission section includes placing the minimalistic mission strip into an appropriately ordered position based on one or more mission details (such as a next required task or mission start time, for example).

At step 816, GCS HMI is configured to remove the indication of the upcoming task. Removing (816) the indication of the upcoming task may include removing the icon/color indicator corresponding to the upcoming task from the corresponding minimalistic mission strip. In general, removing the indication of the upcoming task may include reverting the corresponding minimalistic mission strip to its default display settings.

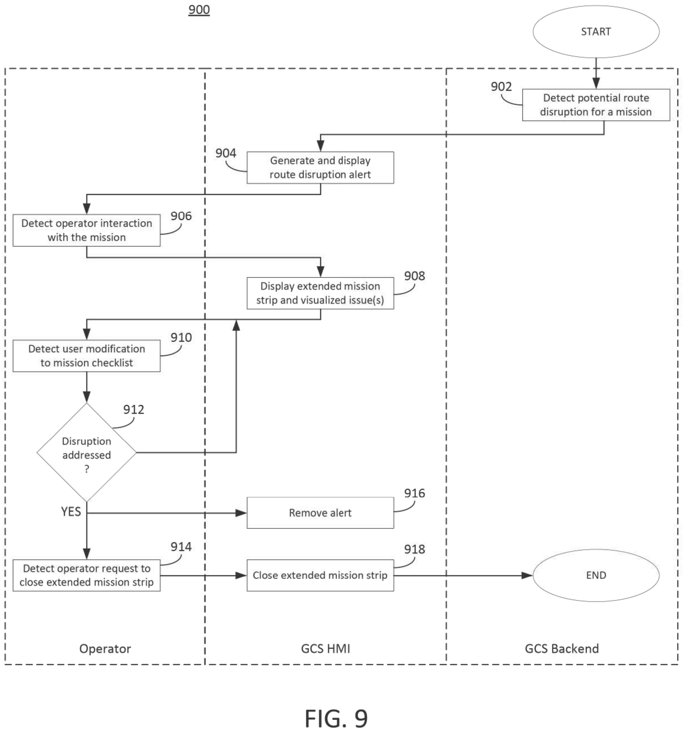

FIG. 9 illustrates a flowchart depicting operations of an example process for generating a vehicle control interface in accordance with at least some example embodiments of the present invention. As depicted, process 900 includes detecting (902) a potential route disruption for a mission, generating (904) a route disruption alert, detecting (906) an operator interaction with the corresponding mission, displaying (908) the corresponding extended mission strip and visualized issue(s), detecting (910) a user modification to the mission checklist, determining (912) whether the disruption has been addressed, detecting (914) an operator request to close the extended mission strip, removing (916) the route disruption alert, and closing (918) the extended mission strip. As depicted, various steps of process 900 are executed by a GCS backend component, a GCS HMI component, and a GCS operator. It should be appreciated that the steps depicted in the operator column may be steps detected by the GCS HMI responsive to a user interaction, for example. Process 900 may enable simultaneous mission control by a single operator. In at least some embodiments, process 900 depicts an example process for addressing an abnormal/emergency situation/task corresponding to a mission.

At step 902, GCS backend component detects a potential route disruption for a subject mission. Detecting (902) a potential route disruption for a mission may include detecting conditions pertinent to a travel route associated with an assigned mission which may disrupt a vehicle's ability to complete a mission on time, or even to complete the mission at all. As an exemplary embodiment, FIG. 9 and process 900 will be described with respect to a detected weather-related route disruption, but it should be appreciated that the subsequent steps may be executed with respect to any number of additional route disruptions (traffic, unexpected vehicle unavailability, unexpected battery conditions, etc.).

At step 904, GCS HMI generates a route disruption alert. Generating (904) a route disruption alert may include generating an alert indicator corresponding to the mission associated with the disrupted route. In at least some embodiments, generating an alert indicator includes displaying an icon with respect to the minimalistic mission strip and/or altering the display settings (color, pattern, etc.) with which the minimalistic mission strip is displayed. In at least some embodiments, generating a route disruption alert additionally includes generating an audio alert such that the operator is immediately alerted that a route disruption and the corresponding mission require their attention.

In at least some embodiments, an alert is generated according to a set of defined rules. If an alert arises on a mission for which an extended mission strip is not currently opened, the corresponding extended mission strip is opened at a first empty slot from the top if there are slots available. If all slots are occupied, the extended mission strip will take the place of an extended mission strip corresponding to a mission with a lower criticality alert. If all slots are occupied and no mission strips currently displayed have a lower criticality alert, the extended mission strip will not be opened automatically, and the alert is indicated only on the minimalistic mission strip.

At step 906, GCS HMI detects an operator interaction with the corresponding mission. Detecting (906) an operator interaction with the corresponding mission may include detecting an operator interaction with the extended mission strip. Detecting an operator interaction with the extended mission strip may include detecting a user interaction with a touch screen/manipulation of a cursor, and determining whether the interaction corresponds to a location at which the extended mission strip (or an interface component enabling a user to trigger display of the extended mission strip) is displayed.

At step 908, GCS HMI displays the corresponding extended mission strip. Displaying (908) the corresponding extended mission strip may include generating a mission strip component in a selected missions window displaying extended mission information corresponding to the subject mission. In at least some embodiments, the extended mission strip is an interface component configured to display mission information beyond what is displayed by the corresponding minimalistic mission strip. In at least some embodiments, the extended mission strip includes a horizontal situation indicator, a mission checklist window, a communication window, a crew alert system window, and one or more quick access buttons. Each section of the extended mission strip may be updated according to current mission/vehicle information received from one or more systems configured to track vehicle/mission progress/state. An example extended mission strip is described in detail with respect to FIG. 3A and FIG.5; in general, the extended mission strip is an interface component comprising mission information and operator interactable buttons/selections beyond what is displayed with respect to the corresponding minimalistic mission strip. In at least some embodiments, GCS HMI is configured to additionally display one or more visualized issues. For example, GCS HMI may be configured to display, on a travel plan map, a location at which a weather disruption is expected to occur, or is currently occurring. GCS HMI may be configured to display such a disruption on a travel plan display displayed simultaneous with the extended mission strip.

At step 910, GCS HMI detects a user modification to the mission checklist. Detecting (910) a user modification to the mission checklist may include detecting an operator's interaction with a checklist window of the extended mission strip. In at least some embodiments, the mission checklist may include one or more non-nominal tasks required for an operator to address the abnormal situation. The mission checklist may include, for example, rerouting a subject vehicle, changing a destination, changing a vehicle's departure time, and the like. In at least some embodiments, detecting (910) operator completion of a mission checklist includes determining whether the checklist has been completed responsive to an operator interaction with (or an operator's decision to exit/minimize) the checklist. In at least some embodiments, GCS HMI is additionally configured to update a mission plan based on the user modification to the mission checklist, and may be configured to provide the updated plan to one or more additional systems.

At step 912, GCS HMI determines whether the disruption has been addressed. Determining (912) whether the disruption has been addressed may include determining whether the updated mission plan has adequately addressed the disruption by determining whether the mission, according to the updated mission plan, is predicted to complete successfully. Using the weather-related disruption example, determining whether the disruption has been addressed may include determining whether a rerouted travel plan will avoid the predicted weather disruption, or determining whether a delayed departure time will lead to the mission vehicle avoiding the predicted weather disruption along the originally planned route. In general, determining (912) whether the disruption has been addressed includes verifying that the updated mission plan adequately avoids or addresses the subject disruption(s).

At step 914, GCS HMI detects an operator request to close the extended mission strip. Detecting (914) an operator request to close the extended mission strip may include detecting an operator interaction with an interface element configured to close the subject extended mission strip. At step 916, GCS HMI removes the route disruption alert. Removing (916) the route disruption alert may include removing any icon corresponding to the route disruption and reverting any corresponding mission strip(s) to normal display settings. For example, removing (916) the disruption alert may include reverting a mission strip to a normal color and/or removing an exclamation point icon indicating a route disruption. At step 918, GCS HMI closes the extended mission strip. Closing (918) the extended mission strip may include removing the extended mission strip from the GCS HMI display.

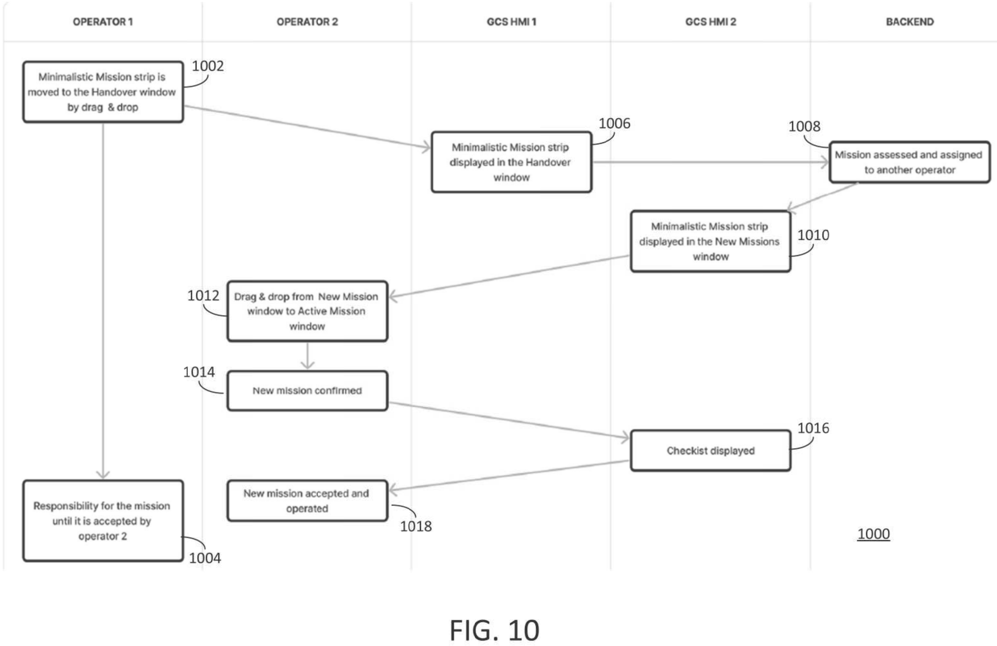

FIG. 10 illustrates a flowchart depicting operations of an example process 1000 for handing over mission control(s) in accordance with at least some example embodiments of the present invention. As depicted, process 1000 includes moving (1002) a minimalistic mission strip to a handover window, assigning (1004) responsibility for the subject mission to a first operator, displaying (1006) the minimalistic mission strip in a handover window of a first GCS HMI, assigning (1008) the subject mission to a second operator, displaying (1010) the minimalistic mission strip in a new missions window of a second GCS HMI, detecting (1012) a second operator's drag and drop action with respect to the minimalistic mission strip, detecting (1014) confirmation of the new mission by the second operator, displaying (1016) a checklist corresponding to the mission via the second GCS HMI, and detecting (1018) that the subject mission has been accepted and operated. As depicted, process 1000 is executable by a backend GCS component, a first GCS HMI, a corresponding first operator, a second GCS HMI, and a corresponding second operator. It should be appreciated that the steps depicted in the operator columns may be steps detected by the corresponding GCS HMI responsive to an operator interaction, for example.

At step 1002, GCS HMI 1 detects user interaction to move a minimalistic mission strip to a handover window. Moving (1002) a minimalistic mission strip to a handover window may include an operator using a drag and drop interaction with respect to the minimalistic mission strip to move it from a first location (such as a new mission window) to a handover window. At step 1004, responsibility for the subject mission is assigned to operator 1 until a handover operation is complete, for example. Assigning (1004) responsibility for the subject mission to a first operator may simply include leaving the subject mission (and corresponding mission strips) in GCS HMI 1, such that operator one is responsible for completing any tasks associated with the subject mission.

At step 1006, GCS HMI 1 displays the minimalistic mission strip in a handover window. Displaying (1006) the minimalistic mission strip in a handover window of GCS HMI 1 may include moving the minimalistic mission strip from the new mission window of GCS HMI 1 to a handover window of GCS HMI 1, thereby indicating that the subject mission is awaiting completion of a handover operation to another operator.

At step 1008, GCS backend component assigns the subject mission to a second operator. Assigning (1008) the subject mission to a second operator may include assessing the mission and identifying at least one additional operator with the bandwidth and capabilities to manage the mission. In at least some embodiments, assigning (1008) the subject mission to a second operator includes selecting an operator whose assigned mission count is below a defined threshold.

At step 1010, GCS HMI 2 displays the minimalistic mission strip in a new missions window of GCS HMI 2. Displaying (1010) the minimalistic mission strip in a new missions window of GCS HMI 2 may include generating a minimalistic mission strip indicating mission information corresponding to the subject mission in a new missions window of an HMI corresponding to the selected additional operator.

At step 1012, GCS HMI 2 detects a second operator's drag and drop action with respect to the minimalistic mission strip. Detecting (1012) a second operator's drag and drop action with respect to the minimalistic mission strip may include an operator using a drag and drop interaction with respect to the minimalistic mission strip to move it from a first location (such as a new mission window) to an active mission window. At step 1014, GCS HMI 2 detects a confirmation of the new mission by the second operator. Detecting (1014) confirmation of the new mission by the second operator may include providing a prompt to the second operator confirming their intention to accept the new mission into their active missions; in such embodiments, detecting confirmation of the new mission includes receiving an affirmative interaction with such a prompt.

At step 1016, GCSI HMI 2 displays a checklist corresponding to the mission. Displaying (1016) a checklist corresponding to the mission via GCS HMI 2 may include displaying an extended mission strip corresponding to the subject mission. As described above, the extended mission strip may include a checklist of tasks associated with the subject mission. Said checklist may include tasks assigned to the second operator subsequent to the second operator's acceptance of the subject mission.

At step 1018, GCS HMI 2 detects user interactions with the displayed checklist indicating mission acceptance and operation. Detecting (1018) that the subject mission has been accepted and operated may further include sending an instruction to GCS HMI 1 indicating that the first operator is no longer responsible for the subject mission.

### Additional Example Interfaces of the Disclosure

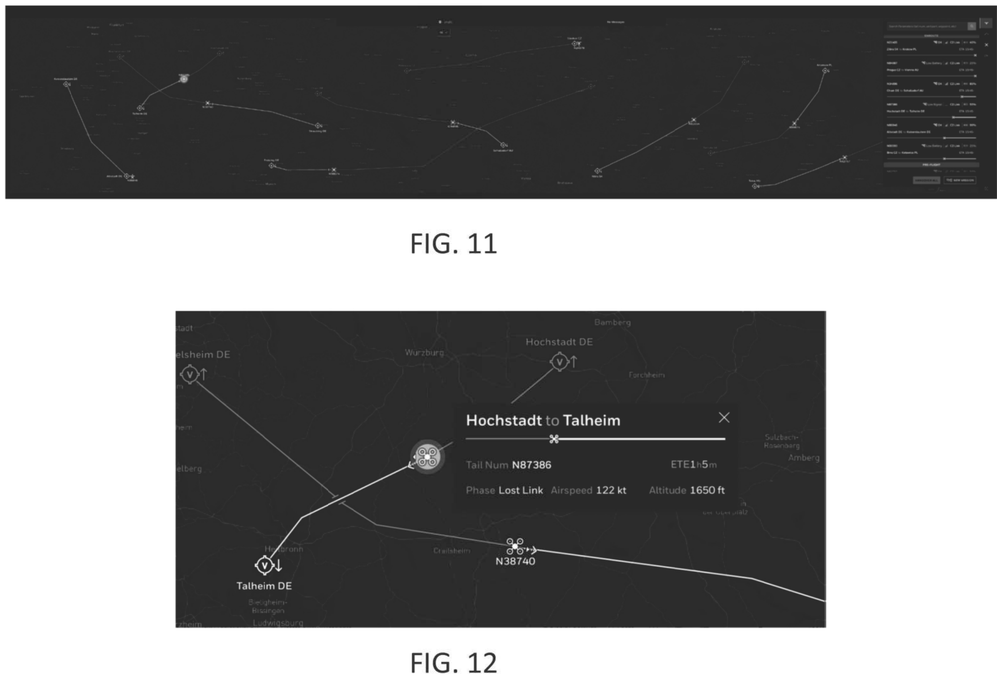

FIG. 11 depicts an example GCS HMI in accordance with at least some embodiments of the present disclosure. As depicted, FIG. 11 includes a map display indicating a plurality of mission travel routes, as well as a set of minimalistic mission strips on the right hand side including data indicating departure locations, arrival locations, battery levels, signal strength, mission progress, and ETA data for a plurality of in progress missions. FIG. 11 additionally depicts sample interface components via which an operator can navigate to a new mission window and a handover window. FIG. 11 depicts a GCS HMI which may be displayed across 3 display devices, for example.

FIG. 12 depicts an example GCS HMI segment in accordance with at least some embodiments of the present disclosure. As depicted, FIG. 12 includes display of two mission travel routes, as well as a minimalistic mission strip corresponding to a mission from Hochstadt to Talheim. As depicted, the minimalistic mission strip indicates mission progress, an ETA, a mission phase, an airspeed measurement, a tail number, and a current altitude.

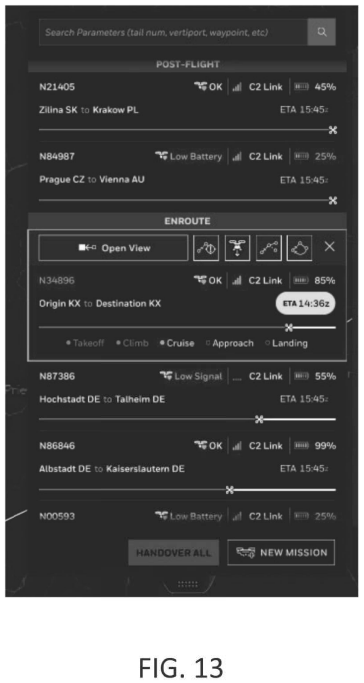

FIG. 13 depicts an example GCS HMI segment in accordance with at least some embodiments of the present disclosure. As depicted, FIG. 13 depicts an active mission window segmented into post-flight missions and enroute missions, each populated with a set of minimalistic mission strips. FIG. 13 further depicts an extended mission strip corresponding to mission N34896 as highlighted.

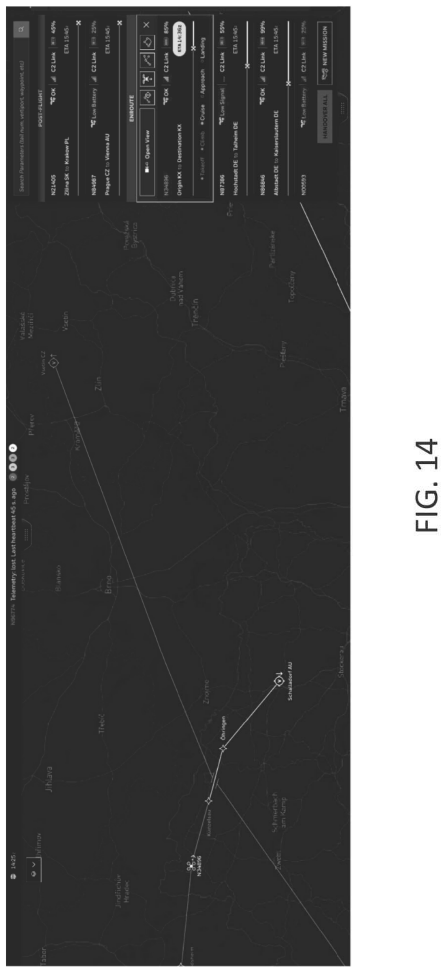

FIG. 14 depicts an example GCS HMI segment in accordance with at least some embodiments of the present disclosure. As depicted, FIG. 14 includes a travel plan display over a map along with an active mission window. FIG. 14 additionally depicts a "telemetry lost" alert at the top of the interface, showcasing one example of a mission alert. Further, FIG. 14 depicts a fleet display with an extended mission strip and the corresponding mission highlighted.

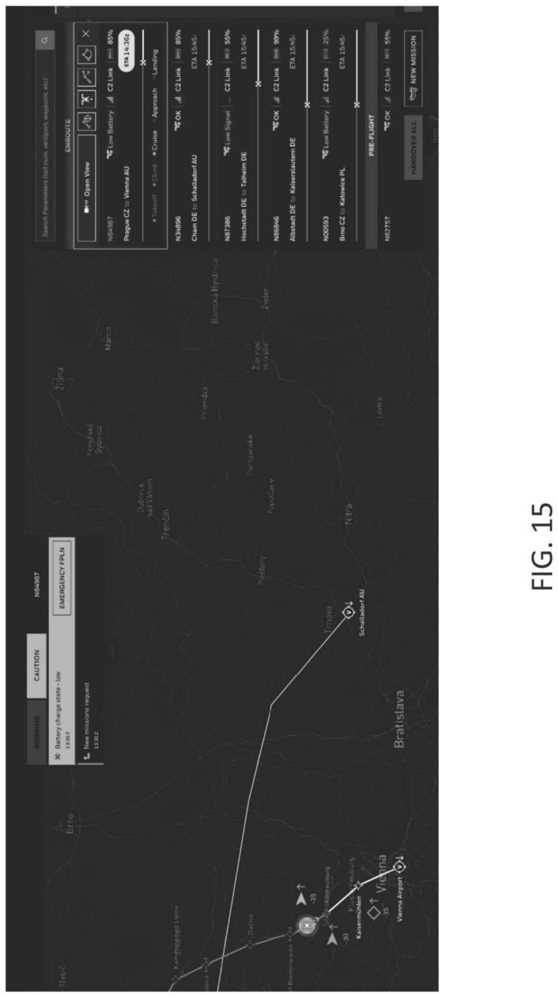

FIG. 15 depicts an example GCS HMI segment in accordance with at least some embodiments of the present disclosure. As depicted, FIG. 15 includes a surrounding traffic display, as well as a "low battery" alert and a recommendation to change course to an emergency flight plan.

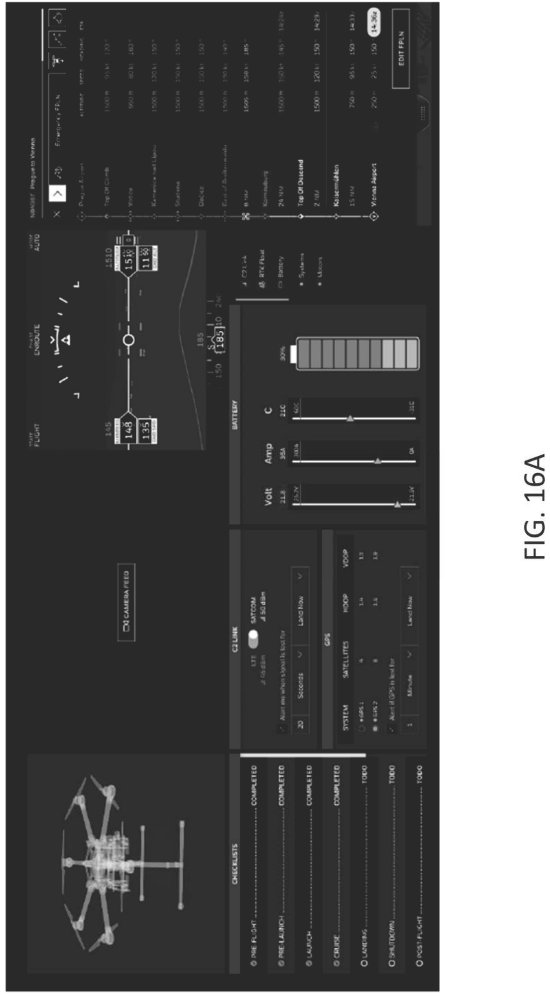

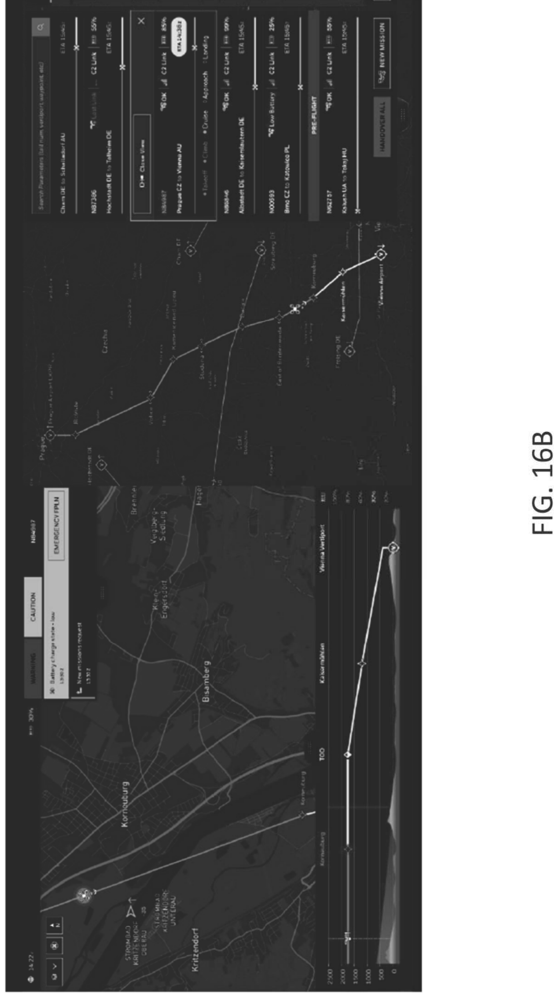

FIG. 16A depicts a first half of a GCS HMI segment in accordance with at least some embodiments of the present disclosure. As depicted, FIG. 16A includes a focused view of a selected mission including checklists, a camera feed, a battery level display, an active mission list, a travel plan/map, as well as visualizations of the current vehicle state. FIG. 16B depicts a second half of the same GCS HMI segment, and includes a flight plan minimized to the right hand side to accommodate display of the other data.

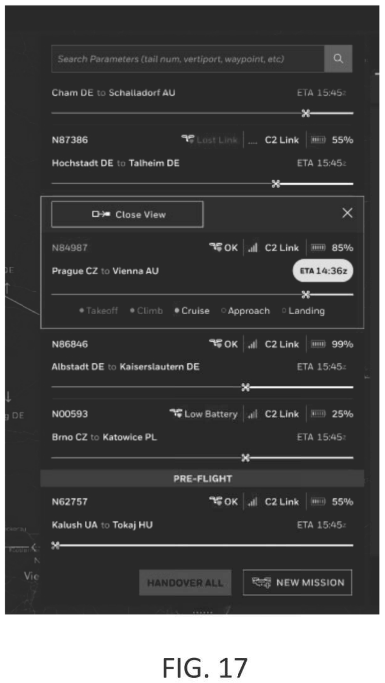

FIG. 17 depicts a GCS HMI segment in accordance with at least some embodiments of the present disclosure. As depicted, FIG. 17 includes a "Close View" button which enables a user to close the focused view of the current mission, thereby reverting the current view to include the fleet display in full view again.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A system configured to manage simultaneous operation of multiple vehicles, the system comprising:
a fleet map display configured to display one or more assigned vehicle flight plans;
a mission strips interface configured to (i) receive confirmation from an operator to accept one or more assigned missions, and (ii) display one or more mission strips corresponding to the one or more assigned missions, the one or more mission strips configured to display a subset of a set of mission information; and
a selected mission interface configured to display one or more extended mission strips corresponding to one or more selected missions of the one or more assigned missions,
wherein the mission strips interface and the selected mission interface are configured to arrange information for display according to mission lifecycle, operator requested information, and pending tasks, and
wherein the fleet map display, the mission strips interface, and the selected mission interface are configured to be displayed simultaneously.

2. The system of claim 1, wherein the mission strips interface is further configured to:
generate a mission checklist corresponding to a subject mission of the one or more assigned missions;
receive operator input corresponding to the generated mission checklist;
determine whether the subject mission has been accepted by the operator based at least in part on the operator input; and
display an extended mission strip corresponding to the subject mission responsive to determining the subject mission has been accepted by the operator.

3. The system of claim 2, wherein the mission checklist corresponds to any of a flight plan change checklist, a pre-flight checklist, a post-flight checklist, a takeoff checklist, a landing checklist, and a landing checklist, and wherein the mission checklist includes reviewing a flight plan, verifying energy conditions, checking a technical state of a vehicle, closing vehicle doors, and requesting mission approval.

4. The system of claim 1, wherein the mission strips interface or the selected mission interface enables a handover mechanism via which an operator can select a handover mission of the one or more assigned missions to be assigned to a different operator, wherein the handover mission is displayed in a handover window of the system until it is accepted by another operator.

5. The system of claim 1, the mission strips interface and the selected mission interface further configured to perform operations comprising:
enabling the operator to indicate a selected mission of the one or more assigned missions;
generating a visual indication corresponding to the selected mission on the mission strips interface, the selected mission interface, and the fleet map display; and
responsive to receiving an indication of a second selected mission, updating the visual indication on the mission strips interface, the selected mission interface, and the fleet map display to indicate the second selected mission.

6. The system of claim 1, wherein the one or more mission strips are configured to display any of: current mission state, callsign, phase of flight, estimated time of arrival (ETA), remaining time to destination, speed, and vehicle altitude.

7. The system of claim 1, wherein the one or more extended mission strips are configured to display (i) a horizontal situation indicator (HIS) window or an attitude display, (ii) a quick action buttons window, (iii) a crew alerting system (CAS) window, (iv) a communication window, (v) a checklist window, and (vi) an overall mission process indicator as indicated by the set of mission information.

8. A computer-implemented method comprising:
displaying a fleet map comprising one or more assigned vehicle flight plans;
receiving confirmation from an operator to accept one or more assigned missions;
generating a display comprising one or more mission strips corresponding to the one or more assigned missions, the one or more mission strips configured to display a subset of a set of mission information; and
generating a selected mission interface configured to display one or more extended mission strips corresponding to one or more selected missions of the one or more assigned missions,
wherein the one or more mission strips are arranged for display according to mission lifecycle, operator requested information, and pending tasks, and
wherein the fleet map, the mission strips, and the selected mission interface are configured to be displayed simultaneously.

9. The computer-implemented method of claim 8, further comprising:
generating a mission checklist corresponding to a subject mission of the one or more assigned missions;
receiving operator input corresponding to the generated mission checklist;
determining whether the subject mission has been accepted by the operator based at least in part on the operator input; and
displaying an extended mission strip corresponding to the subject mission responsive to determining the subject mission has been accepted by the operator.

10. The computer-implemented method of claim 9, wherein the mission checklist corresponds to any of a flight plan change checklist, a pre-flight checklist, a post-flight checklist, a takeoff checklist, a landing checklist, and a landing checklist, and wherein the mission checklist includes reviewing a flight plan, verifying energy conditions, checking a technical state of a vehicle, closing vehicle doors, and requesting mission approval.

11. The computer-implemented method of claim 8, further comprising enabling a handover mechanism via which an operator can select a handover mission of the one or more assigned missions to be assigned to a different operator, wherein the handover mission is displayed in a handover window until it is accepted by another operator.

12. The computer-implemented method of claim 8, further comprising:
enabling the operator to indicate a selected mission of the one or more assigned missions;
generating a visual indication corresponding to the selected mission on the mission strips, the selected mission interface, and the fleet map; and
responsive to receiving an indication of a second selected mission, updating the visual indication on the mission strips, the selected mission interface, and the fleet map to indicate the second selected mission.

13. The computer-implemented method of claim 8, wherein the one or more mission strips are configured to display any of: current mission state, callsign, phase of flight, estimated time of arrival (ETA), remaining time to destination, speed, and vehicle altitude.

14. The computer-implemented method of claim 8, wherein the one or more extended mission strips are configured to display (i) a horizontal situation indicator (HIS) window, (ii) a quick action buttons window, (iii) a crew alerting system (CAS) window, (iv) a communication window, (v) a checklist window, and (vi) an overall mission process indicator as indicated by the set of mission information.

15. A computer program product comprising at least one non-transitory computer-readable storage medium having computer program code stored thereon that, in execution with at least one processor, is configured to execute operations comprising:
displaying a fleet map comprising one or more assigned vehicle flight plans;
receiving confirmation from an operator to accept one or more assigned missions;
generating a display comprising one or more mission strips corresponding to the one or more assigned missions, the one or more mission strips configured to display a subset of a set of mission information; and
generating a selected mission interface configured to display one or more extended mission strips corresponding to one or more selected missions of the one or more assigned missions,
wherein the mission strips and the selected mission interface are arranged according to mission lifecycle, operator requested information, and pending tasks, and
wherein the fleet map, the mission strips, and the selected mission interface are configured to be displayed simultaneously.
